# EUROPÄISCHE PATENTSCHRIFT

(11) **EP 2 799 206 B1**
(45) Veröffentlichungstag und Bekanntmachung des Hinweises auf die Patenterteilung: **21.06.2017**
(21) Anmeldenummer: 14166337.7
(22) Anmeldetag: 29.04.2014
(51) Int. Cl.: B29C 47/90, B29C 47/92, B29C 44/20, B29C 47/86, B29C 47/76

(54) **VERFAHREN ZUR HERSTELLUNG EINES KUNSTSTOFFPROFILS MIT MIKROEINSCHLÜSSEN**
METHOD FOR PRODUCING A PLASTIC PROFILE WITH MICRO INCLUSIONS
PROCÉDÉ DE FABRICATION D'UN PROFILÉ EN MATIÈRE SYNTHÉTIQUE DOTÉ DE MICRO-INCLUSIONS

(30) Priorität: 30.04.2013 DE 102013207978
(43) Veröffentlichungstag der Anmeldung: 05.11.2014
(73) Patentinhaber: Joma-Polytec GmbH, 72411 Bodelshausen (DE)
(72) Erfinder: Wölki, Wolfgang, 72414 Rangendingen (DE); Eryurt, Mustafa, 72411 Bodelshausen (DE)
(74) Vertreter: DREISS Patentanwälte PartG mbB

(56) Entgegenhaltungen:
- EP-A1- 2 489 494
- WO-A1-2008/072832
- DE-A1-102010 040 984
- JP-A- S4 824 821
- JP-A- S4 941 341
- JP-A- S6 172 514
- US-A- 3 922 328
- US-A- 4 690 862
- US-A1- 2011 023 393

## Beschreibung

Die Erfindung betrifft ein Verfahren zur Herstellung eines Kunststoffprofils mit Mikroeinschlüssen. Kunststoffprofile für Fensterrahmen, Türrahmen oder Fassadenelemente sind allgemein bekannt. So können die Kunststoffprofile in Form von Dämmstegen oder Dichtungsstegen bspw. zur Isolierung eines Spaltes zwischen einem Fensterrahmen und einem Fenster selbst oder zum Verschließen von Fugen zwischen Fassadenelementen verwendet werden.

So ist aus der DE 20 2010 006 284 U1 ein Dichtungsprofil für Fenster-, Türrahmen, Fassadenelemente oder dergleichen bekannt, bei dem ein Profilhauptkörper eine Vielzahl von gasförmigen Mikroeinschlüssen aufweist. Die Mikroeinschlüsse sorgen dafür, dass die Wärmeleitfähigkeit des Dichtungsprofils reduziert wird.

Aus der WO 2008/072832 A1 ist ein Verfahren zur Herstellung eines hochglänzenden extrudierten Produkts bekannt. Hierzu wird das thermoplastische Harz kontinuierlich durch eine Düse mit einer relativ hohen Temperatur und durch eine Düse mit einer relativ niedrigen Temperatur geführt.

Aus der US 3 922 328 A ist ein Verfahren zur Herstellung von Schaumstoffprofilen bekannt, welche Eigenschaften von Holz aufweisen sollen. Es entwickelt sich ein poröser Kern innerhalb einer Kalibriereinrichtung während eine Oberflächenschicht abgekühlt wird.

Aus der US 2011/023392 ist ein Herstellungsverfahren für ein thermoplastisches Element bekannt, wobei eine Haut des thermoplastischen Elements eine höhere Dichte hat als das Innere. Das thermoplastische Element wird extrudiert.

Aus der JP S61 72514 A ist eine Steuerung einer Distanz zwischen einer Kalibriereinrichtung und einem Extruder bekannt. Eine Oberflächentemperatur eines Isolators wird mit einem Temperatursensorelement gemessen.

Die JP S49 41341 B1 und die JP S48 24821 B1 betreffen jeweils eine Extrusionsanlage sowie Parameter zur Einstellung der Extrusionsanlage.

Die US 4 690 862 A offenbart ein Extrusionsverfahren zur Schaffung eines verbundenen Extrudats auf Basis eines zellulären und eines nicht-zellulären Granulats. Es ist ein Werkzeug offenbart, bei dem zwei Kanäle vorgesehen sind, um ein gemeinsames Vorprofil erzeugen.

EP 2 489 494 A offenbart ein Verfahren zur Herstellung eines Stabes, bei dem aus einer ersten Kunststoffformmasse, die eine äußerste Schicht bildet und die zu mindestens 50 Gew.-% aus einem teilkristallinen Thermoplasten besteht, ein Kunststoffprofil extrudiert wird. Innerhalb eines Kalibrators wird das frisch extrudierte Profil mit einer zweiten Kunststoffformmasse gefüllt. Der neu gebildete Stab wird kalibriert, abgezogen und gekühlt.

Die erhöhten Anforderungen im Bereich der Gebäudedämmung und Gebäudesanierung schaffen einen Bedarf für Kunststoffprofile, die unter anderem eine erhöhte Wärmedämmkapazität aufweisen.

Aufgabe der Erfindung ist es daher, ein Verfahren zur Herstellung eines Kunststoffprofils mit Mikroeinschlüssen bereitzustellen, das die Wärmeisolation durch das hergestellte Kunststoffprofil verbessert. Diese Aufgabe wird mit einem Verfahren mit den Merkmalen des Anspruchs 1 gelöst. Vorteilhafte Ausgestaltungen und Weiterbildungen der Erfindung sind Gegenstand der abhängigen Ansprüche.

Dadurch, dass das Vorprofil nach dem Verlassen des Extruders nach zumindest 0,1 Sekunden einem Eingang einer Kalibriereinrichtung zugeführt wird, kann vorteilhaft die Dichte des Materials des Kunststoffprofils reduziert werden. Diese Reduktion der Massendichte geht mit einer Erhöhung der Anzahl von Mikroeinschlüssen und/oder einer Vergrößerung der Mikroeinschlüsse einher, weshalb sich dadurch die Wärmeleitfähigkeit des Kunststoffprofils reduziert. Durch das Verfahren wird der Wärmeleitwert des hergestellten Kunststoffprofils ausgehend von einem Wärmeleitwert des Ausgangsmaterials um bis zu 50% verbessert. Gleichzeitig wird durch diese Mikroeinschlüsse die Biegefestigkeit und Torsionsfestigkeit des Kunststoffprofils weiter erhöht. Durch eine Erhöhung der Zeit, die das Vorprofil zwischen dem Ausgang des Extruders und dem Eingang des Kalibierwerkzeugs verbringt, verringert sich die Dichte des Kunststoffprofils und gleichzeitig erhöhen sich die Anzahl und die Größe der Mikroeinschlüsse. Die Mikroeinschlüsse weisen bevorzugt eine runde und/oder ovale Form auf.

Dadurch, dass das Vorprofil einen Ausgang eines Extruders mit einer Ausstoßtemperatur von 294 °C bis 322 °C verlässt, kann vorteilhaft die Dichte des Materials des Kunststoffprofils reduziert werden.

In einer weiteren vorteilhaften Ausführungsform des Verfahrens verlässt das Vorprofil den Extruder mit einer Ausstoßtemperatur von im Wesentlichen 100% bis im Wesentlichen 120% der Soll-Ausstoßtemperatur, insbesondere mit einer Temperatur von im Wesentlichen 105% bis im Wesentlichen 115% der Soll-Ausstoßtemperatur. Durch diese Wahl der Temperatur des Vorprofils beim Verlassen des Extruders kann vorteilhaft die Bildung von Mikroeinschlüssen zwischen dem Extruder und der Kalibiereinrichtung kontrolliert verbessert werden.

In einer weiteren vorteilhaften Ausführungsform des Verfahrens ist die Verweilzeit des Vorprofils zwischen dem Ausgang des Extruders und dem Eingang der Kalibriereinrichtung auf mindestens 0,25 Sekunden, insbesondere mindestens 0,8 Sekunden, insbesondere mindestens 1 Sekunde und insbesondere mindestens 2 Sekunden bestimmt. Durch diese Wahl der Verweilzeit kann ebenfalls die Bildung der Mikroeinschlüsse vorteilhaft verbessert, die Wärmeleitfähigkeit reduziert und die Torsions- und Biegefestigkeit des hergestellten Kunststoffprofils erhöht werden.

Alternativ oder zusätzlich kann auch der Abstand zwischen dem Ausgang des Extruders und dem Eingang der Kalibriereinrichtung vorteilhaft auf mindestens 10 mm, insbesondere mindestens 20 mm und insbesondere mindestens 60 mm oder mindestens 100 mm festgelegt werden.

In einer weiteren vorteilhaften Ausführungsform des Verfahrens ist das Vorprofil zwischen dem Ausgang des Extruders und dem Eingang der Kalibriereinrichtung im Wesentlichen Umgebungsdruck ausgesetzt und die Temperatur zwischen dem Ausgang des Extruders und dem Eingang der Kalibriereinrichtung ist auf einen Bereich von 5°C bis 30°C bestimmt, insbesondere auf 10° C bis 25° C und insbesondere auf einer Temperatur von im Wesentlichen 20° C. Damit ergibt sich vorteilhaft eine einfache und kostengünstige Herstellung des Kunststoffprofils.

In einer weiteren Ausführungsform des Verfahrens wird das Vorprofil vor der Kalibriereinrichtung mit einer Luftdusche und/oder einer Wassersprüheinrichtung behandelt.

Vorteilhaft besteht das Kunststoffprofil aus einem Thermoplast, in dem sich nach dem erfindungsgemäßen Verfahren die Mikroeinschlüsse ausbilden.

Eine weitere vorteilhafte Ausführungsform des Verfahrens betrifft eine Feuchte des Granulats. Durch die Wahl der Feuchte in einem Bereich von im Wesentlichen 0,01 Gew.-% bis im Wesentlichen 0,2 Gew.-%, insbesondere in einem Bereich von im Wesentlichen 0,02 Gew.-% bis im Wesentlichen 0,1 Gew.-% und insbesondere einer Feuchte von mindestens 0,02 Gew.-% wird die Bildung von Mikroeinschlüssen begünstigt. Durch die gewählte Feuchte des Granulats wird darüber hinaus vorteilhaft erreicht, dass keine Treib- oder Schleppmittel zugesetzt werden müssen, um die Bildung der Mikroeinschlüsse zu kontrollieren und damit die gewünschte verringerte Dichte des Kunststoffprofils zu erzeugen.

Vielmehr wird in einer vorteilhaften Weiterbildung des Verfahrens eine Entgasung in einem Entgasungsabschnitt durchgeführt. Vorteilhaft kann über die Anfeuchtung und die Entgasungszone die Bildung der Mikroeinschlüsse besser kontrolliert werden als durch die Zuführung von Treib- oder Schleppmitteln vor der Entgasungszone. Damit wird nicht nur die Bildung der Mikroeinschlüsse besser kontrollierbar, sondern auch die Herstellung vereinfacht sich und Kosten für das Vorsehen von Treib- bzw. Schleppmitteln können reduziert werden.

In einer vorteilhaften Ausführungsform des Verfahrens verlässt das Vorprofil den Ausgang des Extruders mit einer Geschwindigkeit von im Wesentlichen größer 3 m/min, insbesondere im Wesentlichen größer 4 m/min, und im Wesentlichen größer 6m/min.

Vorteilhaft wird in der Kalibriereinrichtung das zugeführte Vorprofil zumindest Abschnittsweise einem Unterdruck ausgesetzt, wodurch sich insbesondere eine abgeschlossene Oberfläche des Kunststoffprofils ohne sichtbare Mikroeinschlüsse ergibt.

Weitere Vorteile, Merkmale und Ausgestaltungen der Erfindung werden im Folgenden unter Bezugnahme auf die beigefügte Zeichnung beschrieben. In der Zeichnung zeigen:
- Figur 1: einen Ausschnitt einer Extrusionsanlage;
- Figur 2: einen detaillierten Ausschnitt der Extrusionsanlage; und
- Figur 3: ein schematisches Dichte-Anzahl-Diagramm.

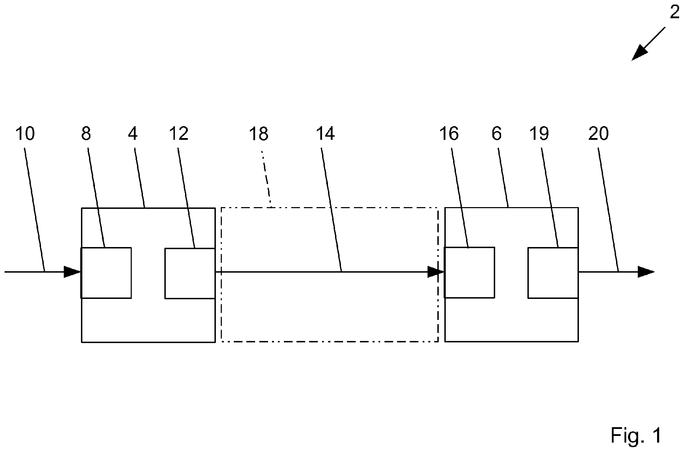

Die Figur 1 der Zeichnung zeigt einen Ausschnitt einer Extrusionsanlage 2 mit einem Extruder 4 und einer Kalibriereinrichtung 6.

Einem Eingang 8 des Extruders 4 wird ein Thermoplast 10 zugeführt, der auch faserverstärkt sein kann. Die Faserverstärkung des Thermoplasts kann einen Faseranteil zwischen 5% bis 40% der Gesamtmasse des faserverstärkten Thermoplasts 10 ausmachen. Die Faserverstärkung kann beispielsweise in Form von Glasfasern und/oder Kohlefasern ausgeführt sein. Insbesondere weist der Thermoplast 10 bis zu 25% Glasfasern oder Kohlefasern, die jeweils eine Länge von 0,5 cm nicht überschreiten, auf.

Dem Granulat des Thermoplasts, insbesondere PPE+PA, werden insbesondere Glas- und/oder Kohlefasern mit einer Länge von mindestens 1 cm zugefügt, die einen Anteil von 20% und insbesondere einen Anteil von 30% an der Gesamtmasse nicht überschreiten, wobei dieser Zusatz von Glas- und/oder Kohlefasern den Vorteil hat, dass sich an den jeweiligen Fasern Einschlüsse bilden, die eine Größe von 100 µm bis 1000 µm aufweisen, womit vorteilhaft über den Anteil an Glas- und/oder Kohlefasern die Dichte des Kunststoffprofils eingestellt werden kann.

Des Weiteren kann dem Granulat eine Glaskugelmischung zugefügt werden, die einen Anteil von 5% des Gesamtgewichts des Granulats nicht überschreitet.

Der Thermoplast 10 ist einer aus der Liste: Polyphenylenether und Polyamid (PPE+PA), Polyamid 6.6 (PA6.6), Acrylnitrit-Butadien-Styrol-Copolymerisat (ABS), Polyphenylensulfid (PPS) oder Syndiotaktisches Polystyrol (SPS). Des Weiteren kann eine Mischung aus zumindest zwei der vorgenannten Thermoplasten vorgesehen sein. In einer weiteren bevorzugten Ausführungsform wird das Material Noryl-GTX als Thermoplast 10 verwendet, das Polyphenylenether und Polyamid (PPE+PA) umfasst. Noryl ist eine eingetragene Marke der Sabic Innovative Plastics IP B.V.. Ein herzustellendes Kunststoffprofil 20 wird im Wesentlichen aus dem Thermoplast 10 hergestellt. Der Thermoplast 10 wird am Eingang 8 des Extruders 4 als Granulat zugeführt. Das Granulat kann vorgetrocknet werden oder aber es wird eine Feuchte dem Granulat zugeführt. Die Feuchte haftet in Form von Wasser an dem Granulat. Um die kontrollierte Einbringung von Mikroeinschlüssen zu erreichen, weist das Granulat die Feuchte, insbesondere in Form von im Wesentlichen Wasser, auf, wobei die Feuchte sich in einem Bereich von im Wesentlichen 0,01 Gew.-% bis im Wesentlichen 0,2 Gew.-%, insbesondere in einem Bereich von im Wesentlichen 0,02 Gew.-% bis im Wesentlichen 0,1 Gew.-% bewegt, oder aber insbesondere die Feuchte mindestens 0,02 Gew.-% beträgt.

Unter Mikroeinschlüssen sind kleine Einschlüsse, vergleichbar mit Poren, zu verstehen. Die Mikroeinschlüsse sind im Wesentlichen gasförmig und im Inneren des Kunststoffprofils 20 zumindest in gleichartigen Querschnitten des Kunststoffprofils 20 im Wesentlichen gleichmäßig verteilt. An der Oberfläche des Kunststoffprofils 20 hingegen sind bevorzugt keine Mikroeinschlüsse vorhanden, sondern das Kunststoffprofil 20 weist im Wesentlichen eine glatte äußere Oberfläche auf. Zur Herstellung eines Dämmstegs mit Mikroeinschlüssen bzw. eines Dichtungsstegs mit Mikroeinschlüssen wird das hergestellte Kunststoffprofil 20 entsprechend einer gewünschten Länge abgelängt. Die Wortwahl "Mikroeinschlüsse" soll selbstverständlich keine Beschränkung für die Größe der Mikroeinschlüsse darstellen.

Der Thermoplast 10 wird bspw. in einem nicht gezeigten Aufnahmebehälter bevorratet und dem Extruder 4 über den Eingang 8 zugeführt. Des Weiteren umfasst der Extruder 4 nicht gezeigte Heizeinrichtungen, um den Thermoplast 10 zu erwärmen und in eine plastische Form zu überführen. Ein Massestrom aus plastischem Thermoplast 10 wird einem Ausgang 12 des Extruders 4 zugeführt.

Der Extruder weist bevorzugt eine Doppelschnecke auf, wobei die Schnecken hin zum Ausgang des Extruders konisch zulaufen. Selbstverständlich sind die vorliegenden Verfahren auch mit Extrudern mit anderen Schneckengeometrien durchführbar.

An dem Ausgang 12 des Extruders 4 tritt ein Vorprofil 14 aus, dass zu zumindest 50%, aus dem Thermoplast 10 besteht. Insbesondere ist der Ausgang 12 des Extruders 4 als Düse ausgebildet. Das Vorprofil 14 verlässt den Ausgang 12 des Extruders 4 mit einer Ausstoßtemperatur von im Wesentlichen über 93% einer Soll-Ausstoßtemperatur und im Wesentlichen unter 140% der Soll-Ausstoßtemperatur. Das Vorprofil 14 verlässt den Extruder 4 mit einer Ausstoßtemperatur von im Wesentlichen 100% bis im Wesentlichen 120% der Soll-Ausstosstemperatur oder mit einer Temperatur von 105% bis 115% der Soll-Ausstoßtemperatur. Diese Temperatur kann bspw. durch einen Sensor erfasst werden, der sich mit seiner Messfühleroberfläche im Bereich des Ausgangs 12 des Extruders 4 befindet.

Der Thermoplast 10 mit Polyphenylenether und Polyamid (PPE+PA) weist die Soll-Ausstoßtemperatur von 280° C auf. Polyphenylenether und Polyamid (PPE+PA) wird auch als Polyphenylenoxid und Polyamid (PPO+PA) bezeichnet. Der Thermoplast 10 mit Polyamid 6.6 (PA6.6) weist die Soll-Ausstoßtemperatur von 270° C auf. Der Thermoplast 10 mit Acrylnitrit-Butadien-Styrol-Copolymerisat (ABS) weist die Soll-Ausstoßtemperatur von 200° C auf. Der Thermoplast 10 mit Polyphenylensulfid (PPS) weist die Soll-Ausstoßtemperatur von 300° C aufweist Der Thermoplast 10 mit syndiotaktischem Polystyrol (SPS) weist die Soll-Ausstoßtemperatur von 250° C auf.

Für den Thermoplast 10 mit Polyphenylenether und Polyamid (PPE+PA), insbesondere Noryl, entsprechen 60% der Soll-Ausstoßtemperatur ungefähr 168 °C, 93% der Soll-Ausstoßtemperatur ungefähr 260 °C, 105% der Soll-Ausstoßtemperatur ungefähr 294 °C, 115% der Soll-Ausstoßtemperatur ungefähr 322 °C, 120% der Soll-Ausstoßtemperatur ungefähr 336 °C, und 140% der Soll-Ausstoßtemperatur ungefähr 392 °C.

PPE+PA, insbesondere Noryl, hat nach DIN EN ISO 11357 eine Glasübergangstemperatur von 145 °C. Mithin entsprechen 116% der Glasübergangstemperatur ungefähr 168 °C, 179% der Glasübergangstemperatur ungefähr 260 °C, 193 % der Glasübergangstemperatur entsprechen 280°C, 203% der Glasübergangstemperatur ungefähr 294 °C, 222% der Glasübergangstemperatur ungefähr 322 °C, 250% der Glasübergangstemperatur ungefähr 336 °C, und 270% der Glasübergangstemperatur ungefähr 392 °C.

Für den Thermoplast 10 mit im Wesentlichen Polyamid 6.6 (PA6.6) entsprechen 60% der Soll-Ausstoßtemperatur ungefähr 162 °C, 93% der Soll-Ausstoßtemperatur ungefähr 251 °C, 105% der Soll-Ausstoßtemperatur ungefähr 284 °C, 115% der Soll-Ausstoßtemperatur ungefähr 311 °C, 120% der Soll-Ausstoßtemperatur ungefähr 324 °C, und 140% der Soll-Ausstoßtemperatur ungefähr 378 °C.

Polyamid 6.6 hat nach DIN EN ISO 11357 eine Glasübergangstemperatur von 260 °C. Mithin entsprechen 116% der Soll-Ausstoßtemperatur von Polyamid 6.6 ungefähr 302 °C, 179% der Soll-Ausstoßtemperatur ungefähr 466 °C, 203% der Soll-Ausstoßtemperatur ungefähr 528 °C, 222% der Soll-Ausstoßtemperatur ungefähr 577 °C, 250% der Soll-Ausstoßtemperatur ungefähr 650 °C, und 270% der Soll-Ausstoßtemperatur ungefähr 702 °C.

Für den Thermoplast 10 mit im Wesentlichen Acrylnitrit-Butadien-Styrol-Copolymerisat (ABS) entsprechen 60% der Soll-Ausstoßtemperatur ungefähr 120 °C, 93% der Soll-Ausstoßtemperatur ungefähr 186 °C,
105% der Soll-Ausstoßtemperatur ungefähr 210 °C, 115% der Soll-Ausstoßtemperatur ungefähr 230 °C, 120% der Soll-Ausstoßtemperatur ungefähr 240 °C, und 140% der Soll-Ausstoßtemperatur ungefähr 280 °C.

Acrylnitrit-Butadien-Styrol-Copolymerisat hat nach DIN EN ISO 11357 eine Glasübergangstemperatur von 110 °C. Mithin entsprechen 116% der Soll-Ausstoßtemperatur von Acrylnitrit-Butadien-Styrol-Copolymerisat ungefähr 128 °C, 179% der Soll-Ausstoßtemperatur ungefähr 197 °C, 203% der Soll-Ausstoßtemperatur ungefähr 223 °C, 222% der Soll-Ausstoßtemperatur ungefähr 244 °C, 250% der Soll-Ausstoßtemperatur ungefähr 275 °C, und 270% der Soll-Ausstoßtemperatur ungefähr 297 °C.

Für den Thermoplast mit im Wesentlichen Polyphenylensulfid (PPS) entsprechen 60% der Soll-Ausstoßtemperatur ungefähr 180 °C, 93% der Soll-Ausstoßtemperatur ungefähr 279 °C, 105% der Soll-Ausstoßtemperatur ungefähr 315 °C, 115% der Soll-Ausstoßtemperatur ungefähr 345 °C, 120% der Soll-Ausstoßtemperatur ungefähr 360 °C, und 140% der Soll-Ausstoßtemperatur ungefähr 420 °C.

Polyphenylensulfid mit 40 % Glasfaser (PPS GF40) hat nach DIN EN ISO 11357 eine Glasübergangstemperatur von 278 °C. Mithin entsprechen 116% der Soll-Ausstoßtemperatur von PPS GF40 ungefähr 323 °C, 179% der Soll-Ausstoßtemperatur ungefähr 498 °C, 203% der Soll-Ausstoßtemperatur ungefähr 564 °C, 222% der Soll-Ausstoßtemperatur ungefähr 617 °C, 250% der Soll-Ausstoßtemperatur ungefähr 695 °C, und 270% der Soll-Ausstoßtemperatur ungefähr 751 °C.

Für den Thermoplast mit im Wesentlichen syndiotaktischem Polystyrol (SPS) entsprechen 60% der Soll-Ausstoßtemperatur ungefähr 150 °C, 93% der Soll-Ausstoßtemperatur ungefähr 233 °C, 105% der Soll-Ausstoßtemperatur ungefähr 263 °C, 115% der Soll-Ausstoßtemperatur ungefähr 288 °C, 120% der Soll-Ausstoßtemperatur ungefähr 300 °C, und 140% der Soll-Ausstoßtemperatur ungefähr 260 °C.

Polystyrol (PS) hat nach DIN EN ISO 11357 eine Glasübergangstemperatur von 100 °C. Mithin entsprechen 116% der Soll-Ausstoßtemperatur von PS ungefähr 116 °C, 179% der Soll-Ausstoßtemperatur ungefähr 179 °C, 203% der Soll-Ausstoßtemperatur ungefähr 203 °C, 222% der Soll-Ausstoßtemperatur ungefähr 222 °C, 250% der Soll-Ausstoßtemperatur ungefähr 250 °C, und 270% der Soll-Ausstoßtemperatur ungefähr 270 °C.

Das Vorprofil 14 verlässt den Ausgang 12 des Extruders 4 mit einer Geschwindigkeit von im Wesentlichen größer 3 m/min, insbesondere im Wesentlichen größer 4 m/min, insbesondere im Wesentlichen größer 6 m/min und insbesondere im Wesentlichen größer als 12 m/min.

Das Vorprofil 14 wird einen Eingang 16 der Kalibriereinrichtung 6 zugeführt. In einem Bereich 18 zwischen dem Ausgang 12 des Extruders 4 und dem Eingang 16 des Kalibriereinrichtung 6 wird das Vorprofil 14 nach dem Verlassen des Extruders 4 nach zumindest 0,1 s dem Eingang 16 der Kalibriereinrichtung 6 zugeführt. Diese Verweilzeit des Vorprofils zwischen dem Ausgang 12 des Extruders 4 in dem Eingang 16 der Kalibriereinrichtung 4 beträgt insbesondere mindestens 0,25 s insbesondere mindestens 0,8 s, insbesondere mindestens 1 s und insbesondere mindestens 2 s.

Des Weiteren kann auch der Abstand zwischen dem Ausgang 12 des Extruders 4 und dem Eingang 16 der Kalibriereinrichtung 6 im Bereich 18 auf einen Werte von mindestens 10 mm insbesondere mindestens 20 mm, insbesondere mindestens 16 mm und insbesondere mindestens 100 mm bestimmt werden.

Darüber hinaus wird das Vorprofil 14 in dem Bereich 18 zwischen dem Ausgang 12 des Extruders 4 und dem Eingang 16 der Kalibriereinrichtung 6 im Wesentlichen einem Umgebungsdruck ausgesetzt. Des Weiteren ist das Vorprofil im Bereich 18 zwischen dem Ausgang 12 des Extruders 4 und dem Eingang 16 der Kalibriereinrichtung 6 einer Temperatur in einem Bereich von 5° C bis 30° C, insbesondere einer Temperatur in einem Bereich von 10° C bis 25° C und insbesondere einer Temperatur von im Wesentlichen 20° C ausgesetzt. Hierzu kann das Vorprofil 14 in dem Bereich 18 bspw. ohne weitere Druckbeaufschlagung oder Temperaturänderung durch die Umgebungsluft bzw. Raumluft geführt werden.

Zusätzlich kann das Vorprofil vor der Kalibriereinrichtung 16 in dem Bereich 18 mit einer Luftdusche und/oder einer Wassersprüheinrichtung behandelt werden. Insbesondere durch die Wassersprüheinrichtung kann zumindest ein Außenbereich des Vorprofils, insbesondere eine Außenfläche des Vorprofils 14 auf eine Temperatur in einem Bereich von 5° C bis 30° C, insbesondere von 10° C bis 25° C und insbesondere auf eine Temperatur von im Wesentlichen 20° C temperiert werden.

Das Vorprofil 14, das dem Eingang 16 der Kalibriereinrichtung 16 zugeführt wird, wird im Inneren der Kalibriereinrichtung 6 zumindest abschnittsweise einem Unterdruck ausgesetzt. Der Unterdruck wird bevorzugt über Schlitze zugeführt, die von einer Fläche des Vorprofils 14 überstrichen werden. Die Schlitze können insbesondere im Wesentlichen quer zur Längsrichtung des Vorprofils 14 angeordnet sein. Bevorzugt wird der Unterdruck auf -0,6 bar oder kleiner, insbesondere auf -0,5 bar oder kleiner bestimmt.

An einem Ausgang 19 der Kalibriereinrichtung 6 tritt das Kunststoffprofil 20 mit den Mikroeinschlüssen aus.

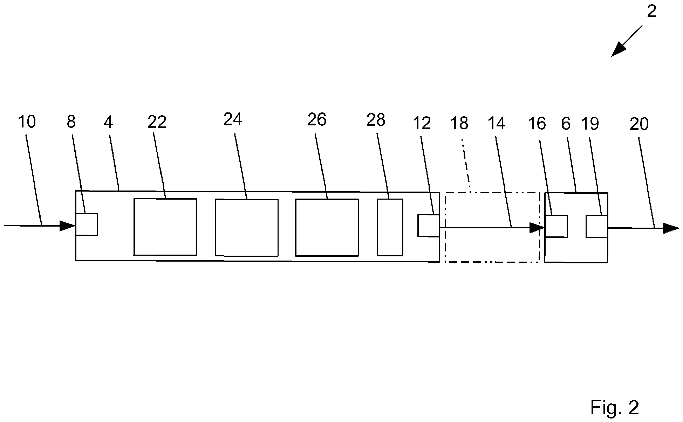

Figur 2 zeigt einen detaillierten Ausschnitt des Extruders 4. Der dem Eingang 8 zugeführte, mit Zuschlagstoffen versehene Thermoplast 10 wird in einer Aufschmelzzone 22 zu einer Schmelze. Die Schmelze aus der Aufschmelzzone 22 wird einem Entgasungsabschnitt 24 zugeführt, der bevorzugt mit Unterdruck betrieben wird. Nach dem Entgasungsabschnitt 24 wird die Schmelze einer Mischzone 26 zugeführt. Vor dem Austritt des Vorprofils 14 wird die Schmelze aus der Mischzone 26 einem Austragswerkzeug 28 zugeführt.

Ein Unterdruck in dem Entgasungsabschnitt 24 wird in Abhängigkeit von der dem Granulat zugeführten Feuchte eingestellt. So können beispielsweise bei einer Feuchte des Granulats in einem Bereich von im Wesentlichen 0,01 Gew.-% bis im Wesentlichen 0,2 Gew.-% der Unterdruck in dem Entgasungsabschnitt 24 auf einen Wert zwischen -0,3 bar und -1 bar eingestellt werden. Bei einer Feuchte des Granulats in einem Bereich von im Wesentlichen 0,02 Gew.-% bis im Wesentlichen 0,1 Gew.-% wird der Unterdruck in dem Entgasungsabschnitt 24 auf einen Wert zwischen -0,3 und - 0,8 bar eingestellt. Bei einer Feuchte des Granulats von 0,02 Gew.-% wird der Unterdruck in dem Entgasungsabschnitt 24 auf einen Wert von -0,3 bar eingestellt. Bei einer Feuchte des Granulats von 0,08 Gew.-% wird der Unterdruck in dem Entgasungsabschnitt 24 auf einen Wert von -0,6 bar eingestellt. Bei einer Feuchte des Granulats von 0,13 Gew.-% wird der Unterdruck in dem Entgasungsabschnitt 24 auf einen Wert von -0,86 bar eingestellt.

Das Austragswerkzeug 28 ist derart ausgestaltet, dass es eine zusätzliche Verwirbelung der Schmelze erzeugt. Hierzu kann die dem Austragswerkzeug 28 zugeführte Schmelze in verschiedene Kanäle vereinzelt werden. Eine Verwirbelung wird beispielsweise durch in den Kanälen vorgesehene Kanten unterstützt. In einer einfachen Ausführungsform besteht das Austragswerkzeug 28 aus einem Lochblech oder Sieb. In einer anderen Ausführungsform umfasst das Austragswerkzeug eine oder mehrere Wellen, die einen Teil der zugeführten Schmelze entgegen der Austragsrichtung fördern und damit eine weitere Vermischung und Verwirbelung innerhalb der Schmelze erzeugen.

Verlässt das Vorprofil 14, das beispielsweise PPE+PA umfasst, den Ausgang 12 des Extruders 4 mit einerTemperatur von beispielsweise 280° C bis 290° C, kann das Vorprofil 14 im Bereich 18 bis zum Eingang 16 der Kalibriereinrichtung 6 auf eine Temperatur von 240° C bis 250° C abkühlen. So kann mittels des Abstands zwischen dem Ausgang 12 und dem Eingang 16 die Eintrittstemperatur des Vorprofils 14 eingestellt werden. Nach Eintritt in die Kalibriereinrichtung wird das Vorprofil, das PPE+PA umfasst, mit einer Temperatur von 16°C abgekühlt. Die weiche Abkühlung des Vorprofils 14 im Bereich 18 ist dadurch gekennzeichnet, dass das Vorprofil 14 im Wesentlichen Umgebungsluft mit einer Raumtemperatur ausgesetzt ist und dadurch weniger Mikroeinschlüsse an der Oberfläche des Kunststoffprofils 20 entstehen. Die schroffe Abkühlung des Vorprofils in der Kalibriereinrichtung 6 hingegen sorgt dafür, dass Mikroeinschlüsse, die bei Eintritt in die Kalibriereinrichtung vorhanden sind, durch die Erkaltung des Vorprofils 14 stabilisiert werden.

Durch die weiche Abkühlung und die schroffe Abkühlung kann sich bei einer beispielhaften gesamten Wanddicke des Vorprofils von 1 mm vorteilhaft an der Oberfläche ein Bereich von 0,3 mm der Wanddicke ausbilden, in dem keine oder eine stark verringerte Anzahl von Mikroeinschlüssen vorhanden ist. Entsprechend ergibt sich ein Bereich von 0,4 mm der Wanddicke, der sich im Inneren der Wandung des Kunststoffprofils 20 befindet, der eine erhöhte Anzahl von Mikroeinschlüssen aufweist. Damit ergibt sich, dass 3/10 der Wanddicke des Kunststoffprofils 20 im Bereich der Oberfläche bevorzugt mit einer reduzierten Anzahl von Mikroeinschlüssen ausgeführt sind.

Bei einer Eintrittstemperatur von 250° C eines Vorprofils 14 umfassend PPE+PA ergibt sich bei einer Kühltemperatur von 16° C in der Kalibriereinrichtung 6 eine Temperaturdifferenz von 234° C, bei einer Kühltemperatur von 25° C in der Kalibriereinrichtung eine Temperaturdifferenz von 225° C, bei einer Kühltemperatur von 80°C in der Kalibriereinrichtung 6 eine Temperaturdifferenz von 170° C. Je höher die Temperaturdifferenz ist, desto schroffer ist die Abkühlung des Vorprofils 14 in der Kalibriereinrichtung. Diese Temperaturdifferenz lässt sich selbstverständlich ohne weiteres auch auf andere Thermoplaste oder Zusammensetzungen von verschiedenen Thermoplasten und/oder Thermoplasten mit Zuschlagstoffen übertragen.

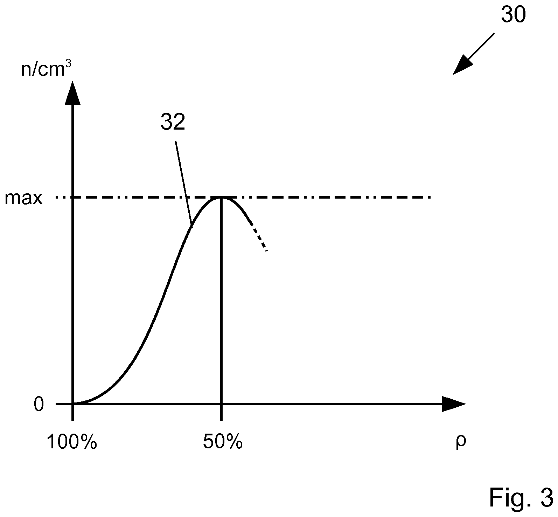

Figur 3 zeigt ein schematisches Dichte-Anzahl-Diagramm 30 mit einer Anzahl n von Mikroeinschlüssen pro cm³ über einer Dichte ρ des Kunststoffprofils 20 in Gramm pro cm³. Ausgehend von einer Rohdichte p von 100 % des Ausgangsmaterials, also des Granulats, ohne Mikroeinschlüsse, beispielsweise ausgehend von einer Dichte von 1,24 g / cm³ eines Granulats umfassend Noryl, erhöht sich die Anzahl der Mikroeinschlüsse n pro cm³ bei abnehmender Dichte ρ gemäß einer Kennlinie 32. Bei einer Reduzierung der Dichte ρ von bis zu im Wesentlichen 50% der Ausgangsdichte, beispielsweise bei einer Dichte von 0,62 g / cm³ des Kunststoffprofils 20 wird ein Maximum max der Anzahl n von Mikroeinschlüssen pro cm³ in dem Kunststoffprofil 20 erreicht. Bei weiter abnehmender Dichte ρ ausgehend von der Dichte von 50% der Ausgangsdichte verringert sich die Anzahl n der Mikroeinschlüsse pro cm³ in dem Kunststoffprofil 20 wieder. Entsprechend ergibt sich bei geringerer Dichte ρ und einer erhöhten Anzahl n eine verbesserte Wärmedämmung durch das Kunststoffprofil 20.

## Patentansprüche

1. Verfahren zur Herstellung eines Kunststoffprofils (20)in Form eines Dämmstegs mit Mikroeinschlüssen oder eines Dichtungsstegs mit Mikroeinschlüssen, wobei einem Extruder (4) ein Thermoplast (10) als Granulat zugeführt wird, wobei der Thermoplast (10) eine Mischung aus Polyphenylenether und Polyamid (PPE + PA) mit einer Glasübergangstemperatur von 145°C nach DIN ISO 11357 ist, wobei das Granulat zur Bildung von Mikroeinschlüssen eine Feuchte aufweist, wobei ein Vorprofil (14), das am Ausgang (12) des Extruders (4) austritt, einem Eingang (16) einer Kalibriereinrichtung (6) zugeführt wird, wobei das Vorprofil (14) am Ausgang (12) des Extruders (4) zu zumindest 50% aus Polyphenylenether und Polyamid (PPE+PA) besteht, wobei das Vorprofil (14) den Ausgang (12) des Extruders (4) mit einer Ausstoßtemperatur von 294 °C bis 322 °C verlässt, wobei das Vorprofil (14) nach dem Verlassen des Extruders (4) zur Reduktion der Massendichte und zur Erhöhung der Anzahl von Mikroeinschlüssen nach einer Verweilzeit von mindestens 0,1 s dem Eingang (16) der Kalibriereinrichtung (6) zugeführt wird, und wobei am Ausgang (19) der Kalibriereinrichtung (6) ein Kunststoffprofil (20) mit Mikroeinschlüssen austritt.

2. Verfahren nach Anspruch 1, **dadurch gekennzeichnet, dass** die Verweilzeit des Vorprofils (14) zwischen dem Ausgang (12) des Extruders (4) und dem Eingang (16) der Kalibriereinrichtung (6) mindestens 0,25 s, insbesondere mindestens 0,8 s, insbesondere mindestens 1 s und insbesondere mindestens 2 s ist, und/oder dass der Abstand zwischen dem Ausgang (12) des Extruders (4) und dem Eingang (16) der Kalibriereinrichtung (6) mindestens 10 mm, insbesondere mindestens 20 mm, insbesondere mindestens 60 mm und insbesondere mindestens 100 mm beträgt.

3. Verfahren nach einem der vorstehenden Ansprüche, **dadurch gekennzeichnet, dass** das Vorprofil (14) zwischen dem Ausgang (12) des Extruders (4) und dem Eingang (16) der Kalibriereinrichtung (6) im Wesentlichen Umgebungsdruck ausgesetzt ist, und dass das Vorprofil (14) zwischen dem Ausgang (12) des Extruders (4) und dem Eingang (16) der Kalibriereinrichtung (6) einer Temperatur in einem Bereich von im Wesentlichen 5° C bis im Wesentlichen 30° C, insbesondere im Wesentlichen 10° bis im Wesentlichen 25° C und insbesondere einer Temperatur von im Wesentlichen 20° C ausgesetzt ist.

4. Verfahren nach einem der vorstehenden Ansprüche, **dadurch gekennzeichnet, dass** das Vorprofil (14) vor der Kalibriereinrichtung (6) mit einer Luftdusche und/oder eine Wassersprüheinrichtung behandelt wird.

5. Verfahren nach einem der vorstehenden Ansprüche, **dadurch gekennzeichnet, dass** das Kunststoffprofil (20) aus dem Thermoplast (10) hergestellt wird, dass dem Extruder (4) der Thermoplast (10) als Granulat zugeführt wird, und dass das Granulat eine Feuchte, die insbesondere im Wesentlichen in Form von Wasser vorliegt, in einem Bereich von im Wesentlichen 0,01 Gew.-% bis im Wesentlichen 0,2 Gew.-%, insbesondere in einem Bereich von im Wesentlichen 0,02 Gew.-% bis im Wesentlichen 0,1 Gew.-% liegt oder die Feuchte, die insbesondere im Wesentlichen in Form von Wasser vorliegt, eine Feuchte von mindestens 0,02 Gew.-% aufweist.

6. Verfahren nach Anspruch 5, wobei eine aus dem die Feuchte aufweisenden Granulat hergestellte Schmelze einem Entgasungsabschnitt (24) zugeführt wird, und wobei ein Unterdruck in dem Entgasungsabschnitt (24) in Abhängigkeit von der dem Granulat zugeführten Feuchte eingestellt wird.

7. Verfahren nach Anspruch 6, wobei bei einer Erhöhung der Feuchte, der Unterdruck in dem Entgasungsabschnitt (24) verstärkt wird.

8. Verfahren nach Anspruch 6 oder 7 wobei der Unterdruck in dem Entgasungsabschnitt (24) auf einen Wert zwischen -0,3 bar und -1 bar, insbesondere auf einen Wert zwischen -0,3 und -0,8 bar, insbesondere auf einen Wert von -0,3 bar, oder -0,6 bar oder -0,86 bar eingestellt wird.

9. Verfahren nach einem der vorstehenden Ansprüche, **dadurch gekennzeichnet, dass** das Vorprofil (14) den Ausgang (12) des Extruders (4) mit einer Geschwindigkeit von im Wesentlichen größer als 3 m/min, insbesondere im Wesentlichen größer als 4 m/min und insbesondere im Wesentlichen größer als 6 m/min verlässt.

10. Verfahren nach einem der vorstehenden Ansprüche, **dadurch gekennzeichnet, dass** die Kalibriereinrichtung (6) das zugeführte Vorprofil (14) zumindest abschnittsweise einem Unterdruck aussetzt, dass der Unterdruck über Schlitze zugeführt wird, die insbesondere im Wesentlichen quer zur Längsrichtung des Vorprofils (14) angeordnet sind, und dass der Unterdruck im Wesentlichen -0,6 bar oder kleiner ist, insbesondere im Wesentlichen -0,5 bar oder kleiner ist.

11. Kunststoffprofil mit Mikroeinschlüssen, das mittels des Verfahrens nach einem der Ansprüche 1 bis 10 hergestellt wird, wobei die Mikroeinschlüsse im Wesentlichen einen durchschnittlichen Durchmesser im Bereich von 20 µm bis 150 µm aufweisen.

## Claims

1. A method for producing a plastic profile section (20) in the form of a insulating bar with microinclusions or a sealing bar with microinclusions, in which a thermoplastic (10) is delivered as granulate to an extruder (4), and the thermoplastic (10) is a mixture of polyphenylether and polyamide (PPE+PA) having a glass transition temperature of 145°C per DIN ISO 11357, wherein the granulate for forming microinclusions has a moisture content, and a preliminary profile section (14) that emerges at the outlet (12) of the extruder (4) is delivered to an inlet (16) of a calibration device (6), and at the outlet (12) of the extruder (4) the preliminary profile section (14) comprises at least 50% polyphenylether and polyamide (PPE+PA), and the preliminary profile section (14) leaves the outlet (12) of the extruder (4) at an expulsion temperature of 294°C to 322°C, and in order to reduce the mass density and to increase the number of microinclusions, the preliminary profile section (14), after leaving the extruder (4) after a dwell time of at least 0.1 s, is delivered to the inlet (16) of the calibration device (6), and a plastic profile section (20) with microinclusions emerges at the outlet (19) of the calibration device (6).

2. The method of claim 1, **characterized in that** the dwell time of the preliminary profile section (14) between the outlet (12) of the extruder (4) and the inlet (16) of the calibration device (6) is at least 0.25 s, in particular at least 0.8 s, in particular at least 1 s, and in particular at least 2 s, and/or that the distance between the outlet (12) of the extruder (4) and the inlet (16) of the calibration device (6) is at least 10 mm, in particular at least 20 mm, in particular at least 60 mm, and in particular at least 100 mm.

3. The method of one of the foregoing claims, **characterized in that** the preliminary profile section (14), between the outlet (12) of the extruder (4) and the inlet (16) of the calibration device (6), is exposed to essentially ambient pressure; and that the preliminary profile section (14), between the outlet (12) of the extruder (4) and the inlet (16) of the calibration device (6), is exposed to a temperature in a range from essentially 5°C to essentially 30°C, in particular essentially 10° to essentially 25°C, and in particular to a temperature of essentially 20°C.

4. The method of one of the foregoing claims, **characterized in that** the preliminary profile section (14), upstream of the calibration device (6), is treated with an air shower and/or a water spray device.

5. The method of one of the foregoing claims, **characterized in that** the plastic profile section (20) is produced from a thermoplastic (10); that the thermoplastic (10) is delivered to the extruder (4) in the form of granulate; and that the granulate has a moisture content which in particular is essentially in the form of water, in a range from essentially 0.01 weight-% to essentially 0.2 weight-%, in particular in a range from essentially 0.02 weight-% to essentially 0.1 weight-%, or that the granulate has a moisture content which in particular is essentially in the form of water of at least 0.02 weight-%.

6. The method of claim 5, wherein a melt produced from the granulate having the moisture content is delivered to a degassing segment (24), and wherein a negative pressure in the degassing segment (24) is adjusted as a function of the moisture content provided to the granulate.

7. The method of claim 6, wherein upon an increase in the moisture content, the negative pressure in the degassing segment (24) is intensified.

8. The method of claim 6 or 7, wherein the negative pressure in the degassing segment (24) is adjusted to a value between -0.3 bar and -1 bar, in particular to a value between -0.3 and -0.8 bar, in particular to a value of -0.3 bar, or -0.6 bar, or -0.86 bar.

9. The method of one of the foregoing claims, **characterized in that** the preliminary profile section (14) leaves the outlet (12) of the extruder (4) at a speed of essentially greater than 3 m/min, in particular essentially greater than 4 m/min, and in particular essentially greater than 6 m/min.

10. The method of one of the foregoing claims, **characterized in that** the calibration device (6) exposes the delivered preliminary profile section (14) at least in some portions to a negative pressure; that the negative pressure is supplied via slots that are located in particular essentially transversely to the longitudinal direction of the preliminary profile section (14); and that the negative pressure is essentially -0.6 bar or less, in particular essentially -0.5 bar or less.

11. A plastic profile section having microinclusions which is produced by the method of one of claims 1 through 10, wherein the microinclusions essentially have a mean diameter in the range from 20 µm to 150 µm.

## Revendications

1. Procédé de fabrication d'un profilé en matière plastique (20) sous forme d'une barrette d'isolation ayant des micro-inclusions ou d'une barrette d'étanchéité ayant des micro-inclusions, dans lequel une matière thermoplastique (10) est amenée en tant que granulés à une extrudeuse (4), dans lequel la matière thermoplastique (10) est un mélange de polyphénylène éther et de polyamide (PPE + PA) ayant une température de transition vitreuse de 145 °C selon DIN ISO 11357, dans lequel les granulés, pour la formation de micro-inclusions, présentent une humidité, dans lequel une ébauche de profilé (14) qui sort à la sortie (12) de l'extrudeuse (4) est amenée à une entrée (16) d'un dispositif de calibrage (6), dans lequel ladite ébauche de profilé (14) à la sortie (12) de l'extrudeuse (4) se compose pour au moins 50 % de polyphénylène éther et de polyamide (PPE + PA), dans lequel l'ébauche de profilé (14) sort de la sortie (12) de l'extrudeuse (4) à une température d'éjection comprise entre 294 °C et 322 °C, dans lequel, après avoir quitté l'extrudeuse (4), l'ébauche de profilé (14) est amenée après un temps de séjour d'au moins 0,1 s à l'entrée (16) du dispositif de calibrage (6) pour réduire la masse volumique et pour augmenter le nombre de micro-inclusions, et dans lequel un profilé en matière plastique (20) ayant des micro-inclusions sort à la sortie (19) du dispositif de calibrage (6).

2. Procédé selon la revendication 1, **caractérisé par le fait que** le temps de séjour de l'ébauche de profilé (14) entre la sortie (12) de l'extrudeuse (4) et l'entrée (16) du dispositif de calibrage (6) est de 0,25 s au moins, en particulier de 0,8 s au moins, en particulier de 1 s au moins et en particulier de 2 s au moins, et/ou que la distance séparant la sortie (12) de l'extrudeuse (4) et l'entrée (16) du dispositif de calibrage (6) est de 10 mm au moins, en particulier de 20 mm au moins, en particulier de 60 mm au moins et en particulier de 100 mm au moins.

3. Procédé selon l'une quelconque des revendications précédentes, **caractérisé par le fait que**, entre la sortie (12) de l'extrudeuse (4) et l'entrée (16) du dispositif de calibrage (6), l'ébauche de profilé (14) est exposée pour l'essentiel à la pression ambiante, et que, entre la sortie (12) de l'extrudeuse (4) et l'entrée (16) du dispositif de calibrage (6), l'ébauche de profilé (14) est exposée à une température se situant dans une plage allant de sensiblement 5 °C à sensiblement 30 °C, en particulier de sensiblement 10 °C à sensiblement 25 °C et en particulier à une température de sensiblement 20 °C.

4. Procédé selon l'une quelconque des revendications précédentes, **caractérisé par le fait que**, en amont du dispositif de calibrage (6), l'ébauche de profilé (14) est traitée au moyen d'une douche à air et/ou d'un dispositif de pulvérisation d'eau.

5. Procédé selon l'une quelconque des revendications précédentes, **caractérisé par le fait que** le profilé en matière plastique (20) est fabriqué à partir de la matière thermoplastique (10), que la matière thermoplastique (10) est amenée en tant que granulés à l'extrudeuse (4) et que les granulés présentent une humidité se présentant en particulier pour l'essentiel sous forme d'eau qui se situe dans une plage allant de sensiblement 0,01 % en poids à sensiblement 0,2 % en poids, en particulier dans une plage allant de sensiblement 0,02 % en poids à sensiblement 0,1 % en poids, ou l'humidité se présentant en particulier pour l'essentiel sous forme d'eau est de 0,02 % en poids au moins.

6. Procédé selon la revendication 5, dans lequel une masse fondue produite à partir des granulés présentant l'humidité est amenée à une portion de dégazage (24), et dans lequel une dépression dans ladite portion de dégazage (24) est réglée en fonction de l'humidité amenée aux granulés.

7. Procédé selon la revendication 6, dans lequel, lorsque l'humidité augmente, la dépression dans la portion de dégazage (24) est augmentée.

8. Procédé selon la revendication 6 ou 7, dans lequel la dépression dans la portion de dégazage (24) est réglée à une valeur comprise entre -0,3 bar et -1 bar, en particulier à une valeur qui est comprise entre -0,3 et - 0,8 bar, en particulier à une valeur de -0,3 bar ou - 0,6 bar ou -0,86 bar.

9. Procédé selon l'une quelconque des revendications précédentes, **caractérisé par le fait que** l'ébauche de profilé (14) sort de la sortie (12) de l'extrudeuse (4) à une vitesse pour l'essentiel supérieure à 3 m/min, en particulier pour l'essentiel supérieure à 4 m/min et en particulier pour l'essentiel supérieure à 6 m/min.

10. Procédé selon l'une quelconque des revendications précédentes, **caractérisé par le fait que** le dispositif de calibrage (6) soumet l'ébauche de profilé (14) amenée, au moins par sections, à une dépression, que la dépression est amenée via des fentes qui sont disposées en particulier pour l'essentiel transversalement à la direction longitudinale de l'ébauche de profilé (14) et que la dépression est pour l'essentiel de -0,6 bar ou plus faible, en particulier pour l'essentiel de -0,5 bar ou plus faible.

11. Profilé en matière plastique ayant des micro-inclusions qui est fabriqué au moyen du procédé selon l'une quelconque des revendications 1 à 10, dans lequel les micro-inclusions présentent pour l'essentiel un diamètre moyen compris entre 20 µm et 150 µm.
